(19) Europäisches Patentamt
European Patent Office
Office européen des brevets

(11) **EP 3 884 332 B1**

(12) **FASCICULE DE BREVET EUROPEEN**

(45) Date de publication et mention de la délivrance du brevet:
**18.09.2024 Bulletin 2024/38**

(21) Numéro de dépôt: **19817412.0**

(22) Date de dépôt: **20.11.2019**

(51) Classification Internationale des Brevets (IPC):
**G02B 27/00** $^{(2006.01)}$

(52) Classification Coopérative des Brevets (CPC):
**G06F 17/11; G02B 27/0012; G02B 27/0927; G02B 27/095; G02B 27/0977**

(86) Numéro de dépôt international:
**PCT/IB2019/059969**

(87) Numéro de publication internationale:
**WO 2020/104960 (28.05.2020 Gazette 2020/22)**

(54) **PROCEDE DE CREATION D'UN COMPOSANT OPTIQUE POUR GÉNÉRER, A PARTIR D'UNE SOURCE D'ECLAIRAGE DONNÉE, UN ECLAIRAGE EN CHAMP PROCHE DONNE**

**VERFAHREN ZUR ERZEUGUNG EINER OPTISCHEN KOMPONENTE ZUR ERZEUGUNG EINER VORGEGEBENEN NAHFELDBELEUCHTUNG AUS EINER VORGEGEBENEN LICHTQUELLE**

**PROCESS FOR CREATING AN OPTICAL COMPONENT FOR GENERATING, FROM A GIVEN LIGHT SOURCE, A GIVEN NEAR-FIELD ILLUMINATION**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.11.2018 FR 1871709**

(43) Date de publication de la demande:
**29.09.2021 Bulletin 2021/39**

(73) Titulaires:
- **Université Grenoble Alpes
  38400 Saint Martin d'Hères (FR)**
- **Institut Polytechnique De Grenoble (Grenoble Inp)
  38000 Grenoble (FR)**
- **CENTRE NATIONAL DE LA RECHERCHE SCIENTIFIQUE (CNRS)
  75016 Paris (FR)**
- **Université Paris-Saclay
  91190 Saint-Aubin (FR)**

(72) Inventeurs:
- **MEYRON, Jocelyn
  38401 Saint-Martin-d'Hères (FR)**
- **MÉRIGOT, Quentin
  91405 Orsay CEDEX (FR)**
- **THIBERT, Boris
  38401 Saint-Martin-d'Hères (FR)**

(74) Mandataire: **Novaimo
Europa 1
362, avenue Marie Curie
Archamps Technopole
74166 Saint-Julien-en-Genevois Cedex (FR)**

(56) Documents cités:
**EP-A1- 2 963 463     EP-A2- 2 711 745**

- **SCHWARTZBURG Y ET AL: "High-contrast computational caustic design", ACM TRANSACTIONS ON GRAPHICS, ACM, 2 PENN PLAZA, SUITE 701NEW YORKNY10121-0701USA, vol. 33, no. 4, 27 July 2014 (2014-07-27), pages 1 - 11, XP058052014, ISSN: 0730-0301, DOI: 10.1145/2601097.2601200**
- **MERIGOT Q ET AL: "Light in Power: A General and Parameter-free Algorithm for Caustic Design", ARXIV:1708.04820V1 [CS.GR] 16 AUG 2017, 16 August 2017 (2017-08-16), XP080953094**

- **MEYRON J ET AL: "Geometric methods for the conception of optical components in non-imaging optics", SLIDES OF PRESENTATION AT THE 19TH JOURNÉE GRAPHES ET ALGORITHMES (JGA 2017), LABRI, BORDEAUX, 15 December 2017 (2017-12-15), XP055638148, Retrieved from the Internet <URL:https://jga2017.sciencesconf.org/data/pages/Meyron_jga_2017.pdf> [retrieved on 20191031]**
- **MEYRON J: "Semi-discrete optimal transport and applications in non-imaging optics", PHD THESIS, COMPUTER SCIENCE, UNIVERSITÉ GRENOBLE ALPES, HAL ID: TEL-02135220, 21 May 2019 (2019-05-21), XP055638145, Retrieved from the Internet <URL:https://tel.archives-ouvertes.fr/tel-02135220/document> [retrieved on 20191031]**
- **MEYRON J ET AL: "Light in power", 20181204; 1077952576 - 1077952576, 4 December 2018 (2018-12-04), pages 1 - 13, XP058421418, ISBN: 978-1-4503-6008-1, DOI: 10.1145/3272127.3275056**

**Description**

La présente invention porte sur la fabrication de composants optiques, en particulier sur la fabrication d'un composant optique pour générer, à partir d'une source d'éclairage donnée, un éclairage donné sur une cible en champ proche (distance finie).

Le domaine de l'optique non imageante (ou optique anidolique, en anglais non-imaging optics) traite de la conception de composants optiques dont l'objectif est de transférer le rayonnement optique émis par une source de lumière sur une cible prescrite. Cette question est au coeur de nombreuses applications pour lesquelles on souhaite optimiser l'utilisation d'énergie lumineuse par diminution de la perte de lumière ou de la pollution lumineuse. De tels problèmes surviennent notamment mais non exclusivement dans la conception de faisceaux de phares, d'éclairages publics, de fours solaires ou encore par exemple pour la culture hydroponique.

Pour une cible en champ lointain (à l'infini), la création de composants optiques (par exemple miroirs et lentilles) permettant de transporter l'énergie lumineuse émise par une source de lumière vers cette cible en champ lointain est connue : étant donné une source de lumière collimatée (comme le soleil) ou ponctuelle (émise par un point), et une cible de lumière souhaitée en champ lointain, les composants optiques créés ont la propriété de réfléchir (dans le cas des miroirs) ou de réfracter (dans le cas des lentilles) la source de lumière sur la cible de lumière (comme une image en noir et blanc). La publication scientifique « Light in power: A general and parameter free algorithm for caustic design » (Lumière en puissance : un algorithme général et sans paramètres pour une conception de caustique), Quentin Mérigot, Jocelyn Meyron, Boris Thibert, version 1, 31/07/2017, arXiv:1708.04820, décrit ainsi un procédé de création d'un composant optique pour générer un éclairage donné à partir d'une source d'éclairage donnée, sur une cible en champ lointain.

Il existe également des procédés pour créer des composants optiques pour générer un éclairage donné à partir d'une source d'éclairage donnée, sur une cible en champ proche. La publication scientifique « High contrast computational caustic design » (Conception caustique calculatoire à contraste élevé), Yuliy Schwartzburg, Romain Testuz, Andrea Tagliasacchi, Mark Pauly, ACM, Transactions on Graphics (TOG) 33, 4 (2014), 74, présente la construction de lentilles de bonnes qualités dans le cas d'une source de lumière collimatée (c'est-à-dire des rayons parallèles, comme ceux du soleil) et d'une cible en champ proche (à distance finie). La méthode utilisée est basée sur des heuristiques et nécessite un ajustement de plusieurs paramètres, ce qui s'avère complexe en pratique.

Il n'existe cependant pas de procédé simple, facile à paramétrer voire sans paramètres, qui permette de créer un composant optique pour générer sur une cible en champ proche (à distance finie) un éclairage donné à partir d'une source d'éclairage donnée.

La présente invention se propose de répondre à ce besoin en proposant un procédé reposant sur la résolution itérative d'une suite de problèmes d'optique anidolique en champs lointain.

Le Demandeur a effet constaté de manière surprenante que la résolution d'une suite de problèmes d'optique anidolique en champs lointain convergeait vers une solution d'optique anidolique en champ proche.

La présente invention a donc pour objet un procédé de fabrication d'un composant optique configuré pour générer sur une cible d'éclairage en champ proche un éclairage ayant un motif déterminé selon lequel chaque point (i) de la cible d'éclairage reçoit une quantité de lumière (alpha_i) par un éclairage issu d'une source de lumière d'éclairage incident sur le composant optique placé entre la source de lumière d'éclairage et la cible d'éclairage, caractérisé par le fait que le procédé comprend les étapes suivantes :

(a) positionner un point origine entre la source de lumière d'éclairage et la cible d'éclairage,
(b) pour chaque point (i) de la cible d'éclairage, calculer une direction (dir_i) qui correspond à la direction du vecteur reliant le point origine et le point (i) sur la cible d'éclairage,
(c) positionner un point de repère entre le point origine et la cible d'éclairage,
(d) créer le composant optique dont la surface passe par le point de repère et qui, lorsque l'éclairage issu la source de lumière d'éclairage est incident sur le composant optique, génère un éclairage constitué par l'ensemble des éclairages de direction (dir_i) et de quantité de lumière (alpha_i),
(e) pour chaque point (z_i) du composant optique générant l'éclairage de direction (dir_i) et de quantité de lumière (alpha_i), calculer une direction corrigée (dirc_i) qui correspond à la direction du vecteur reliant le point (z_i) et le point (i) sur la cible d'éclairage,
(f) déterminer si, pour chaque point (i), la différence entre la direction (dir_i) et la direction corrigée (dirc_i) satisfait un critère prédéterminé,
(g) si, pour chaque point (i), la différence entre la direction (dir_i) et la direction corrigée (dirc_i) satisfait le critère prédéterminé, fabriquer le composant optique correspondant au composant optique,
(h) si, pour chaque point (i), la différence entre la direction (dir_i) et la direction corrigée (dirc_i) ne satisfait pas le critère prédéterminé, réitérer les étapes (d) à (f) en substituant (dir_i) par (dirc_i).

L'étape (d) de fabrication d'un composant optique est une fabrication d'un composant optique pour une cible en champ lointain. N'importe quel procédé peut être utilisé pour créer ce composant optique pour une cible en champ lointain. De préférence, mais non exclusivement, le procédé décrit dans la publication « Light in power: A general and parameter free algorithm for caustic design » sera utilisé, ce procédé étant décrit plus en détail dans la partie description détaillée de l'invention.

Selon un mode de réalisation, le critère prédéterminé de l'étape (f) est que la moyenne sur chaque point (i) des normes des différences entre la direction (dir_i) et la direction corrigée (dirc_i) est inférieure à une valeur prédéterminée, par exemple mais non exclusivement inférieure à $10^6$, la différence étant calculée par soustraction de (dir_i)-(dirc_i).

Plus précisément, le calcul de ce critère global pour N points est donné par :

$$(\text{Norme}((dir\_1)-(dirc\_1))+\text{Norme}((dir\_2)-(dirc\_2))+...+\text{Norme}((dir\_N)-(dirc\_N)))/N,$$

la norme d'un vecteur v() avec trois coordonnées étant donnée par

$$\text{Norme }(v) = \text{racine carrée de } (v1^*v1 + v2^*v2 + v3^* v3)$$

Selon un mode de réalisation, la source de lumière d'éclairage est l'une parmi une source de lumière ponctuelle et une source de lumière collimatée.

Selon un mode de réalisation, le composant optique est l'un parmi un composant optique concave et un composant optique convexe.

Selon un mode de réalisation, le composant optique est l'un parmi un miroir et une lentille.

Pour mieux illustrer l'objet de la présente invention, on va en décrire ci-après un mode de réalisation particulier, en référence aux dessins annexés.

Sur ces dessins :

[Fig. 1] est un schéma illustrant une étape du procédé selon l'invention ;
[Fig. 2] est un schéma illustrant une autre étape du procédé selon l'invention ;
[Fig. 3] est un schéma illustrant une autre étape du procédé selon l'invention ;
[Fig. 4] est une simulation de différentes itérations du procédé de l'invention, pour une lentille concave et un miroir convexe.

En préambule à la description du procédé de la présente invention, la méthode permettant de créer un composant optique, pour générer un éclairage donné à partir d'une source d'éclairage donnée sur une cible en champ lointain (à l'infini) va être décrite.

Comme indiqué plus haut, cette méthode, qui correspond à la méthode décrite dans la publication « Light in power: A general and parameter free algorithm for caustic design », n'est pas la seule méthode qui peut être utilisée et toute méthode analogue ou équivalente peut être utilisée dans le cadre de la présente invention, l'invention n'étant donc aucunement limitée à cette méthode.

Pour illustrer la méthode, nous présentons plusieurs problèmes de conception de miroir ou de lentille se produisant en optique anidolique. Dans tous les problèmes, il est donné une source de lumière (collimatée ou ponctuelle) et un éclairage souhaité sur une cible en champ lointain, après réflexion ou réfraction. Le but est de concevoir la géométrie d'un miroir ou d'une lentille qui transporte l'énergie émise par la source sur la cible, les réfractions et réflexions multiples n'étant pas prises en compte. Même si les problèmes considérés sont différents les uns des autres, ils partagent une structure commune qui correspond à l'équation dite de Monge-Ampère généralisée, dont la version discrète est donnée par l'équation (1) :

$$\forall i \in \{1, ..., n\} \int_{V_i(\psi)} \rho(x)dx = \sigma_i \qquad (1)$$

La méthode est illustrée pour des lentilles et des miroirs, concaves ou convexes, avec des sources ponctuelles ou collimatées.

1 - Conception de miroir

1.1 - Miroir convexe pour une source de lumière collimatée

Pour ce premier problème, la source de lumière est collimatée : la source de lumière peut être codée par une fonction d'intensité de lumière ρ sur un domaine 2D. Pour simplifier, on suppose que le domaine est inclus dans $\mathbb{R}^2 \times \{0\} \subset \mathbb{R}^3$ et que tous les rayons sont parallèles à la direction z (verticale) et dirigés vers le haut. L'éclairage cible souhaité est en champ lointain (à l'infini) et est décrit par une ensemble de valeurs d'intensité $\sigma = (\sigma_i)_{1 \leq i \leq N}$ supportées sur un ensemble fini de directions $Y = \{y_1, \ldots, y_n\}$ inclues dans la sphère unitaire $\mathbb{S}^2$. Le problème est de trouver la surface $\mathcal{R}$ d'un miroir qui envoie l'intensité de source ρ à l'intensité cible σ. Ce problème correspond à une équation de Monge-Ampère dans le plan 2D, ce qui correspond à un problème de transport optimal quadratique.

Etant donné que le nombre de directions réfléchies est fini, la surface de miroir $\mathcal{R}$ est composée d'un nombre fini de facettes planes. Nous définissons $R_\psi$ comme le graphe d'une fonction convexe de la forme $x \mapsto max_i\langle x|p_i\rangle - \psi_i$, où $\langle x|y\rangle$ dénote le produit scalaire entre x et y ; pour tout $i \in \{1,.., N\}$, $p_i$ est la projection orthogonale d'une normale unitaire du plan (appelée pente dans ce qui suit) qui réfléchit selon la loi de Snell-Descartes le rayon vertical (0,0,1) vers la direction $y_i$, $\psi_i$ est un nombre réel qui code l'élévation du plan de support avec la pente $p_i$.

$\psi := (\psi_i)_{1 \leq i \leq N}$ désigne l'ensemble des élévations. La cellule de Visibilité $V_i(\psi)$ de $y_i$ est définie comme ensemble d'emplacements $x \in \mathbb{R}^2 \times \{0\}$ dont les rayons sont réfléchis ver la direction $y_i$, ce qui signifie que les rayons verticaux frappent la ième facette de $R_\psi$.

Etant donnée la définition de $R_\psi$, nous avons :

$$V_i(\psi) = \left\{ x \in \mathbb{R}^2 \times \{0\} \mid \forall j, -\langle x|p_i\rangle + \psi_i \leq -\langle x|p_j\rangle + \psi_j \right\}$$

Par construction, le rayon vertical émanant du point $x \in V_i(\psi)$ touche la surface de miroir $\mathcal{R}$ à une altitude $\langle x|p_i\rangle - \psi_i$ pour un i donné et est réfléchi vers la direction $y_i$, et par conséquent la quantité de lumière réfléchie vers la direction $y_i$ est égale à l'intégrale de ρ sur $V_i(\psi)$. Nous avons également $\nabla R_\psi(x) = p_i$ si $x \in V_i(\psi)$. Le problème du miroir avec source collimatée revient alors à trouver $(\psi_i)$ de telle sorte que :

$$\forall i \in \{1, \ldots, n\} \int_{V_i(\psi)} \rho(x)dx = \sigma_i \qquad (1)$$

Par construction, une solution de l'équation (1) fournit une paramétrisation $R_\psi$ d'un miroir convexe qui envoie la source de lumière collimatée sur la cible discrète σ : $R_\psi : x \in \mathbb{R}^2 \mapsto (x, max_i\langle x|p_i\rangle - \psi_i)$ où $\mathbb{R}^2 \times \{0\}$ et $\mathbb{R}^2$ sont identifiés. On note qu'étant donné que le miroir est un graphe sur $\mathbb{R}^2 \times \{0\}$, les vecteurs $y_i$ ne peuvent pas être dirigés vers le haut. En pratique, on suppose que :

$$y_i \in \mathbb{S}^2_- := \{x \in \mathbb{S}^2, \langle x|e_z\rangle \leq 0\}.$$

En outre, nous localisons la position du miroir en le considérant uniquement au-dessus du support :

$$X_\rho := \{x \in \mathbb{R}^2 \times \{0\}, \rho(x) \neq 0\} \text{ de } \rho.$$

La même approche permet également la construction de miroirs concaves, à l'aide d'une fonction concave de la forme $x \mapsto min_i\langle x|p_i\rangle + \psi_i$. Ceci revient à remplacer les cellules de Visibilité par :

$$V_i(\psi) = \left\{ x \in \mathbb{R}^2 \times \{0\} \mid \langle x|p_i\rangle + \psi_i \leq \langle x|p_j\rangle + \psi_j \forall j \right\}$$

Dans ce cas, une solution à l'équation (1) fournit une paramétrisation d'un miroir concave $R_\psi(x) = (x, min_i\langle x|p_i\rangle + \psi_i)$ qui envoie la source de lumière collimatée ρ sur la source discrète σ.

1.2 - Miroir concave pour une source de lumière ponctuelle

Dans ce second problème de conception, tous les rayons sont émis à partir d'un unique point dans l'espace, situé à l'origine, et la source de lumière est décrite par une fonction d'intensité ρ sur la sphère unitaire $\mathbb{S}^2$ .

Comme dans le cas précédent, la cible est en champ lointain et est décrite par un ensemble de valeurs $\sigma = (\sigma_i)_{1 \leq i \leq N}$ supportées sur l'ensemble fini de directions $Y = \{y_1, ..., y_N\} \subset \mathbb{S}^2$ . Le problème que nous considérons est de trouver la surface $\mathcal{R}$ d'un miroir qui envoie l'intensité de lumière ρ sur l'intensité de lumière σ.

Nous construisons ensuite une surface concave $\mathcal{R}$ qui est composée de morceaux de paraboloïdes confocaux. Plus précisément, nous dénotons par $P(y_i, \psi_i)$ le paraboloïde plein dont le point focal est à l'origine avec la distance focale $\psi_i$ et avec la direction $y_i$. Nous définissons la surface $R_\psi$ comme la limite de l'intersection des paraboloïdes pleins, à savoir $R_\psi = \partial(\cap_i P(y_i, \psi_i))$. La cellule de Visibilité $V_i(\psi)$ est l'ensemble de directions de rayons $x \in \mathbb{S}^2$ émanant de la source de lumière qui sont réfléchies dans la direction $y_i$. Etant donné que chaque paraboloïde $\partial P(y_i, \psi_i)$ est paramétré sur la sphère par $x \mapsto \psi_i x/(1 - \langle x|y_i\rangle)$, on a :

$$V_i(\psi) = \left\{ x \in \mathbb{S}^2 \,|\, \forall j, \frac{\psi_i}{1 - \langle x|y_i\rangle} \leq \frac{\psi_j}{1 - \langle x|y_j\rangle} \right\}.$$

Le problème miroir source ponctuelle revient alors à trouver ($\psi_i$) qui satisfait l'équation de conservation d'énergie lumineuse (1). La surface de miroir est alors paramétrée par :

$$R_\psi : x \in \mathbb{S}^2 \mapsto min_i \frac{\psi_i}{1 - \langle x|y_i\rangle} x.$$

En pratique, on suppose que la cible Y est inclue dans $\mathbb{S}^2_-$ , que le support $X_\rho$ de ρ est inclus dans $\mathbb{S}^2_+ := \{x \in \mathbb{S}^2, \langle x|e_z\rangle \geq 0\}$ et que le miroir est paramétré sur $X_\rho$

On peut définir également la surface de miroir comme la limite de l'union (au lieu de l'intersection) d'une famille de paraboloïdes pleins. La cellule de Visibility devient alors :

$$V_i(\psi) = \left\{ x \in \mathbb{S}^2 \,|\, \forall j, \frac{\psi_i}{1 - \langle x|y_i\rangle} \geq \frac{\psi_j}{1 - \langle x|y_j\rangle} \right\}$$

et une solution de l'équation (1) fournit une paramétrisation $R_\psi(x) = (x max_i \psi_i/(1 - \langle x|y_i\rangle))$ de la surface de miroir.

2. Conception de lentille

Dans cette section, le but est de concevoir des lentilles qui réfractent une intensité de source de lumière donnée vers une cible souhaitée. De manière similaire à une conception de miroir, nous considérons des sources de lumière collimatées ou ponctuelles.

On désigne par $n_1$ l'indice de réfraction de la lentille, par $n_2$ l'indice de réfraction de l'espace ambiant et par $K = n_1/n_2$ le rapport des deux indices.

Nous considérons ici une source de lumière collimatée codée par une fonction ρ sur un domaine 2D et un éclairage cible supporté sur un ensemble fini :

$$Y = \{y_1, ..., y_N\} \subset \mathbb{S}^2, \text{ codé par } \sigma = (\sigma_i)_{1 \leq i \leq N}.$$

L'objectif est de trouver la surface d'une lentille qui envoie ρ sur σ.

Nous supposons que les rayons émis par la source sont verticaux et que la base de la lentille est plate et orthogonale à l'axe vertical. Il n'y a pas d'angle de réfraction lorsque les rayons entrent dans la lentille, et nous avons par conséquent uniquement besoin de construire la partie supérieure de la lentille.

Par un simple changement de variables, nous montrons que ce problème est équivalent à la conception d'un miroir pour une source collimatée. Plus précisément, pour tout $y_i \in Y$ nous définissons maintenant $p_i$ comme étant la pente d'un plan qui réfracte le rayon vertical (0,0,1) vers la direction $y_i$. Nous définissons $\mathcal{R}$ comme le graphe d'une fonction convexe de la forme $x \mapsto max_i \langle x|p_i \rangle - \psi_i$, où $\psi = (\psi_i)_{1 \leq i \leq N}$ est l'ensemble des élévations. Nous définissons la cellule de Visibilité $V_i(\psi)$ comme étant l'ensemble de points $x \in \mathbb{R}^2 \times \{0\}$ qui sont réfractés vers la direction $y_i$ :

$$V_i(\psi) = \left\{ x \in \mathbb{R}^2 \times \{0\} \mid \forall j, -\langle x|p_i \rangle + \psi_i \leq -\langle x|p_j \rangle + \psi_j \right\}$$

Le problème de conception d'une lentille pour une source de lumière collimatée revient alors à trouver des poids $\psi = (\psi_i)_{1 \leq i \leq N}$ qui satisfont l'équation (1). Dans ce cas, la surface de lentille est paramétrée par :

$$R_\psi : x \in \mathbb{R}^2 \mapsto (x, max_i \langle x|p_i \rangle - \psi_i)$$

En pratique, on choisit les directions $y_i$ dans $\mathbb{S}^2_+$ et le miroir à paramétrer sur le support $X_\rho$ de ρ.

On remarque qu'il est également possible de construire des lentilles concaves en prenant en compte des paramétrisations avec des fonctions convexes de la forme $x \mapsto min_i \langle x|p_i \rangle + \psi_i$.

2.2 Lentille convexe pour une source ponctuelle

Nous considérons le même problème, sauf que la source de lumière collimatée est remplacée par une source ponctuelle. Comme dans la configuration de la source collimatée, on fixe la base de la lentille. On choisit un morceau de sphère centré sur la source, de telle sorte que les rayons ne sont pas déviés. La lentille est composée de morceaux d'ellipsoïdes d'excentricités constantes K>1, ou K est le rapport des indices de réfraction. Chaque ellipsoïde $\partial E(y_i, \psi_i)$ peut être paramétré sur la sphère par $x \mapsto \psi_i x/(1 - K\langle x|y_i \rangle)$.

La cellule de Visibilité est alors :

$$V_i(\psi) = \left\{ x \in \mathbb{S}^2 \mid \forall j, \frac{\psi_i}{1 - K\langle x|y_i \rangle} \leq \frac{\psi_j}{1 - K\langle x|y_j \rangle} \right\}$$

Le problème pour lentille source ponctuelle revient alors à trouver les poids $(\psi_i)_{1 \leq i \leq N}$ qui satisfont l'équation (1).

La surface supérieure de la lentille est alors paramétrée par :

$$R_\psi : x \in \mathbb{S}^2 \mapsto min_i \frac{\psi_i}{1 - K\langle x|y_i \rangle} x.$$

On choisit en pratique l'ensemble de directions $y_i$ comme appartenant à $\mathbb{S}^2_+$ et la lentille à paramétrer sur le support $X_\rho \subset \mathbb{S}^2_+$ de ρ.

On peut également choisir de définir la surface de lentille comme la limite de l'union (au lieu de l'intersection) d'une famille d'ellipsoïdes pleins. Dans ce cas, les cellules de Visibilité sont données par :

$$V_i(\psi) = \left\{ x \in \mathbb{S}^2 \mid \forall j, \frac{\psi_i}{1 - K\langle x|y_i \rangle} \geq \frac{\psi_j}{1 - K\langle x|y_j \rangle} \right\}$$

et une solution à l'équation (1) fournit une paramétrisation

$$R_\psi(x) = x\, max_i\psi_i/(1 - K\langle x|y_i\rangle)$$

de la surface de lentille.

### 3. Formulation générale

Soit X un domaine soit du plan $\mathbb{R}^2 \times \{0\}$ , soit de la sphère unitaire $\mathbb{S}^2$, $\rho : X \to \mathbb{R}$ une densité de probabilité et $Y = \{y_1, ..., y_N\} \subset \mathbb{S}^2$ un ensemble de N points. On définit la fonction $G : \mathbb{R}^N \to \mathbb{R}^N$ par :

$$G_i(\psi) = \int_{V_i(\psi)} \rho(x)dx$$

où $G(\psi) = (G_i(\psi))_{1\leq i\leq N}$ et $V_i(\psi) \subset X$ est la cellule de Visibilité de $y_i$, dont la définition dépend du problème anidolique. En utilisant cette notation, l'équation (1) peut être reformulée en trouver des poids $\psi = (\psi_i)_{1\leq i\leq N}$ tels que :

$$\forall i \in \{1, ..., N\}, G_i(\psi) = \sigma_i \qquad\qquad (2)$$

### 4. Cellules de Visibilité et de Puissance

Il est donc nécessaire de calculer les cellules de Visibilité $V_i(\psi)$ associées à chaque modélisation optique. Les cellules de Visibilité ont toujours la même structure, permettant de construire un algorithme générique, comme détaillé ci-après. Dans tous les problèmes d'optique anidolique, les cellules de Visibilité sont de la forme :

$$V_i(\psi) = Pow_i(P) \cap X \qquad\qquad (3)$$

Pour une source collimatée, X désigne le plan $\mathbb{R}^2 \times \{0\}$ et pour une source ponctuelle, X est la sphère unitaire $\mathbb{S}^2$ . Les ensembles $Pow_i(P)$ sont les cellules de Puissance habituelles d'un nuage de points pondérés P = $\{(p_i, \omega_i)\} \subset \mathbb{R}^3 \times \mathbb{R}$ .

$$Pow_i(\mathrm{P}) := \{\mathrm{x} \in \mathbb{R}^3 \,|\forall j, \|x - p_i\|^2 + \omega_i \leq \|x - p_j\|^2 + \omega_j \}.$$

L'expression du nuage de points pondérés P = $\{(p_i, \omega_i)\}$ dépend du problème. La déduction de l'expression pour $p_i$ et $w_i$ dans le cas miroir source collimatée est expliquée, les autres formules étant exposées dans le Tableau 1 pour les autres cas. Dans le cas miroir source collimatée, la source de lumière est collimatée et $p_i \in \mathbb{R}^2 \times \{0\}$ est la pente du plan qui réfléchit (selon la loi de Snell-Descartes) le rayon vertical vers le haut $e_z := (0, 0, 1)$ vers la direction $y_i$. Un calcul montre que $p_i = P_{\mathbb{R}^2}(y_i - e_z)/\langle y_i|e_z|e_z\rangle$ , où $P_{\mathbb{R}^2}$ désigne la projection orthogonale sur $\mathbb{R}^2 \times \{0\}$ .

La cellule de Visibilité de $y_i$ est alors donnée par :

$$V_i(\psi) = \left\{ x \in \mathbb{R}^2 \times \{0\} \mid \forall j, -\langle x|p_i \rangle + \psi_i \leq -\langle x|p_j \rangle + \psi_j \right\}$$

$$= Pow_i(P) \cap (\mathbb{R}^2 \times \{0\}),$$

où

$$\omega_i = 2\psi_i - \|p_i\|^2.$$

On peut en conclure que les cellules de Visibilité pour un miroir convexe du problème miroir source ponctuelle sont données par l'équation (3), dans laquelle le nuage de points pondérés est donné par la première ligne du Tableau 1, qui donne les formules pour les points pondérés utilisés pour définir les cellules de Puissance dans l'équation (3) pour différents problèmes d'optique anidolique. Dans le problème de conception de lentille, K>0 est le rapport des indices de réfraction, K>1 dans la configuration source ponctuelle et lentille. Ccv signifie concave, Cvx signifie convexe, $\widetilde{Ccv}$ signifie que le composant optique converge vers un composant concave lorsque la discrétisation tend vers l'infini, CS signifie source collimatée, PS source ponctuelle :

[Tableaux 1]

| Type | Points | Poids |
|---|---|---|
| Cvx (CS/miroir) | $p_i = \frac{p_z 2(y_i - e_z)}{(y_i - e_z|e_z)}$ | $\omega_i = 2\psi_i - \|p_i\|^2.$ |
| Ccv (Cs/miroir) | $p_i = -\frac{p_z 2(y_i - e_z)}{(y_i - e_z|e_z)}$ | $\omega_i = 2\psi_i - \|p_i\|^2.$ |
| $\widetilde{Ccv}$ (PS/miroir) | $p_i = -\frac{y_i}{2\ln(\psi_i)}$ | $\omega_i = -\frac{1}{\ln(\psi_i)} - \frac{1}{4\ln(\psi_i)^2}$ |
| Cvx (PS/miroir) | $p_i = y_i/(2\ln(\psi_i))$ | $\omega_i = \frac{1}{\ln(\psi_i)} - \frac{1}{4\ln(\psi_i)^2}$ |
| Cvx (CS/lentille) | $p_i = -\frac{p_z 2(y_i - \kappa e_z)}{(y_i - \kappa e_z|e_z)}$ | $\omega_i = 2\psi_i - \|p_i\|^2$ |
| Ccv (Cs/ lentille) | $p_i = \frac{p_z 2(y_i - \kappa e_z)}{(y_i - \kappa e_z|e_z)}$ | $\omega_i = 2\psi_i - \|p_i\|^2$ |
| Cvx (PS/ lentille) | $p_i = -\kappa \frac{y_i}{2\ln(\psi_i)}$ | $\omega_i = -\frac{1}{\ln(\psi_i)} - \frac{\kappa^2}{4\ln(\psi_i)^2}$ |
| $\widetilde{Ccv}$ (PS/ lentille) | $p_i = \kappa y_i/(2\ln(\psi_i))$ | $\omega_i = \frac{1}{\ln(\psi_i)} - \frac{\kappa^2}{4\ln(\psi_i)^2}$ |

5. Algorithme générique

Pour chaque problème de conception optique, étant donnés une fonction d'intensité de source de lumière, une fonction d'intensité de lumière cible et un paramètre d'erreur, l'algorithme 1 (ci-après) donne une triangulation d'un miroir ou d'une lentille qui satisfait l'équation de conservation d'énergie lumineuse (1).

Le principal problème est de trouver des poids ip tels que $G(\psi) = \sigma$. Ceci est réalisé par un algorithme de Newton amorti qui a un taux de convergence local quadratique pour des problèmes de transport optimal ou pour des équations de Monge-Ampère dans le plan.

L'algorithme comprend trois étapes :

- Initialisation : on discrétise la densité de source en une densité affine par morceaux et la cible une en une mesure supportée de manière finie. On construit ensuite les poids initiaux $\psi^0$ satisfaisant la condition $\forall i, G_i(\psi^{(0)}) > 0$.
- Newton amorti : on construit une séquence $\psi^k$ suivant l'algorithme 2 jusqu'à ce que $\|G(\psi^k - \sigma)\|_\infty \leq \eta$.
- Construction de surface : on convertit enfin la solution $\psi^k \in \mathbb{R}^N$ en une triangulation. En fonction du problème d'optique anidolique, cela revient à approcher une union (ou une intersection) de demi-espaces (ou de paraboloïdes pleins ou d'ellipsoïdes) par une triangulation.

Initialisation :

Discrétisation de fonctions d'intensité de lumière : le cadre de la méthode permet de supporter tout type de source de lumière collimatée ou ponctuelle, ou fonctions d'intensité de lumière cible. Ce peut être par exemple une fonction positive sur le plan ou la sphère (en fonction du problème) ou une image en niveaux de gris, ce qui est vu comme une fonction affine par morceaux. Nous approchons d'abord le support de la densité de source $\rho$ par une triangulation T et supposons que la densité $\rho : T \mapsto \mathbb{R}^+$ est affine sur chaque triangle. On normalise ensuite $\rho$ par division de celle-ci par l'intégrale totale $\int_T \rho(x)dx$.

De manière similaire, la fonction d'intensité de lumière cible peut également être toute mesure de probabilité discrète. Si l'utilisateur fournit une image, on peut la transformer en une mesure discrète de la forme $\sigma = \Sigma_i\, \sigma_i\delta_{y_i}$ à l'aide de l'algorithme de Lloyd's ou plus simplement en prenant une masse de Dirac par pixel, qui est ce que nous utilisons. La mesure cible est également normalisée en divisant par l'intégrale discrète $\sigma = \Sigma_i\, \sigma_i$. Nous avons besoin de $min_i\sigma_i >$ 0 pour l'algorithme de Newton amorti, mais ceci n'est pas une restriction : si $\sigma_i = 0$, nous éliminons simplement la masse de Dirac correspondante $\delta_{y_i}$, permettant ainsi d'assurer qu'aucune lumière n'est envoyée vers $y_i$.

Choix de la famille initiale de poids $\psi^0$ : comme mentionné plus haut, nous devons nous assurer à chaque itération que toutes les cellules de Visibilité ont des intérieurs non vides. En particulier, nous devons choisir un ensemble de poids initiaux $\psi^o = (\psi_i^0)_{1 \leq i \leq N}$ de telle sorte que les cellules de Visibilité initiales ne soient pas vides.

Pour les cas des sources de lumière collimatées (avec miroir ou lentille), nous voyons que si nous choisissons $\psi_i^0 = \|p_i\|^2/2$ , alors $\omega_i = 0$, où $p_i$ est obtenu par utilisation des formules du paragraphe 4 (Cellules de Visibilité et de Puissance). Le diagramme de Visibilité devient alors un diagramme de Voronoi, par conséquent $p_i \in V_i(\psi^0)$.

Pour le cas miroir source ponctuelle, un calcul montre que si nous choisissons $\psi_i^0 = 1$ , alors $-y_i \in V_i(\psi^0)$.

Pour le cas lentille source ponctuelle, nous pouvons montrer que si nous choisissons également $\psi_i^0 = 1$ , alors $y_i \in V_i(\psi^0)$.

On remarque que les expressions précédentes pour $\psi^0$ assurent que $G_i(\psi^0) = \rho(V_i(\psi^0)) > 0$ uniquement lorsque le support $X_\rho$ de la source de lumière est suffisamment grand. Dans le cas à titre d'exemple miroir source ponctuelle, si $y_i \notin X_\rho$, alors nous pouvons avoir $G_i(\psi^0) = 0$. Pour traiter cette difficulté, nous utilisons une interpolation linéaire entre $\rho$ et une densité constante supportée sur un ensemble qui contient les $-y_i$. Cette stratégie fonctionne également pour les cas lentille source collimatée, lentille source ponctuelle et lentille source collimatée.

Algorithme de Newton amorti : Lorsque la source de lumière est collimatée (c'est-à-dire $X = \mathbb{R}^2 \times \{0\}$), le problème est connu comme étant un problème de transport optimal dans le plan pour le coût quadratique, la fonction $G$ est le gradient d'une fonction concave, sa matrice Jacobienne $DG$ est symétrique et $DG \leq 0$. De plus, si $G_i(\psi) > 0$ pour tout i et si $X_\rho$ est connectée, alors le noyau de $DG$ s'étend sur $\psi = cst$. Ceci assure la convergence de l'algorithme de Newton amorti présenté dans l'algorithme 2 ci-après, ou A$^+$ désigne la matrice pseudo-inverse de A. En pratique, prendre la matrice pseudo-inverse de $D\tilde{G}(\widetilde{\psi^k})$ garantit que la moyenne de $\widetilde{\psi^k}$ reste constante. En pratique toujours, on retire une ligne et une colonne de la matrice pour la rendre de rang plein.

Lorsque la source de lumière est une source ponctuelle, nous effectuons un changement de variable $\tilde{\psi} = \ln(\psi)$ et $\tilde{G} = G \circ \exp$, de telle sorte que $G(\psi) = \sigma$. Ce changement de variable transforme le problème de conception de composant optique en un problème de transport optimal, assurant que $\tilde{G}$ est le gradient d'une fonction concave et que $D\tilde{G}$ est symétrique négative, donc facilement inversible. Dans le problème miroir source ponctuelle avec des miroirs convexes, l'algorithme de Newton amorti a été prouvé convergent.

Calcul de $G$ et $DG$ : selon le paragraphe 4, les cellules de Visibilité $V_i(\psi)$ peuvent être calculées par intersection d'un certain diagramme de puissance 3D avec une triangulation T du support $X_\rho$ de $\rho$. Une telle intersection peut par exemple être calculée par l'algorithme décrit dans « A numerical algorithm for L$^2$ semi-discrete optimal transport in 3D » (algorithme numérique pour un transport optimal semi-discret L$^2$ en 3D), Bruno Lévy, arXiv preprint arXiv :1409.1279 (2014). Alors $G_i(\psi) = \int_{V_i(\psi)}\rho(x)dx$ peut être calculé à l'aide de formules de quadrature de premier ordre. Le calcul de $DG$ est réalisé en utilisant une différenciation automatique directe, où nous stockons le gradient de $G_i(\psi)$ en tant que vecteur creux. On note que ceci fonctionne assez efficacement étant donné que tous les nombres qui apparaissent dans le calcul de $G_i(\psi)$ dépendent uniquement des valeurs de $\psi_j$ où j est tel que (i, j) sont voisins dans le diagramme de Visibilité, c'est-à-dire $V_i(\psi) \cap V_j(\psi) \neq \varnothing$.

Système linéaire : étant donné que $D\tilde{G}$ est creuse et symétrique négative, nous résolvons les systèmes linéaires en utilisant le gradient conjugué préconditionné.

Construction de surface : Dans la dernière étape de l'algorithme 1, nous construisons une triangulation de la surface du miroir ou de la lentille. L'entrée est une famille de poids résolvant l'équation (2) et la fonction de paramétrisation $R_\psi$ dont la formule est donnée plus haut et dépend des différents cas. On triangule chaque cellule de Visibilité en prenant l'enveloppe convexe des sommets de sa frontière. Un sommet de la triangulation appartiendra à au moins une cellule de Visibilité. Pour chaque sommet, il est possible de calculer exactement la normale à la surface continue en utilisant la loi de Snell-Descartes étant donné que le rayon incident et la direction réfléchie/réfractée correspondante $y_i$ sont connus.

Les algorithmes 1 et 2 sont décrits ci-après :

<u>Algorithme 1</u> : construction de miroir/lentille

Entrée : une fonction d'intensité de source de lumière $\rho_{in}$

une fonction d'intensité de lumière cible $\sigma_{in}$

une tolérance $\eta$

Sortie : une triangulation $R_T$ d'un miroir ou d'une lentille

Etape 1 : Initialisation

$$T, \rho \leftarrow SOURCE\_DISCRETISATION\ (\rho_{in})$$
$$Y, \sigma \leftarrow CIBLE\_DISCRETISATION\ (\sigma_{in})$$
$$\psi^0 \leftarrow VECTEURS\_INITIAUX\ (Y)$$

Etape 2 : Résoudre équation (2) : $G(\psi) = \sigma$

$$\psi \leftarrow NEWTON\_AMORTI\ (T, \rho, Y, \sigma, \psi^0, \eta)$$

Etape 3 : Construire une triangulation $R_T$ de R

$$R_T \leftarrow CONSTRUCTION\_SURFACE\ (\psi, R_\psi)$$

Algorithme 2 : Méthode de Newton amorti pour $G(\psi) = \sigma$

Entrée : la source $\rho : T \mapsto \mathbb{R}^+$ et une cible $\sigma = \sum_i \sigma_i \delta_{y_i}$ ; un vecteur initial $\psi^0$ et une tolérance $\eta > 0$.

Etape 1 : Transformation en un problème de transport optimal

SI $X = \mathbb{R}^2 \times \{0\}$, $alors$ $\widetilde{\psi^0} = \psi^0$ $(et$ $\tilde{G} = G)$

SI $X = \mathbb{S}^2$, alors $\widetilde{\psi^0} = (\ln(\psi_i^0))_{1 \leq i \leq N}$ $(et$ $\tilde{G} = (G_i \circ exp)_{1 \leq i \leq N})$

Etape 2 : Résoudre l'équation $\tilde{G}(\tilde{\psi}) = \sigma$

Initialisation : $\varepsilon_0 := \min[min_i\, G_i(\psi^0), min_i\sigma_i] > 0$, k :=0

Tant que $\left\| \tilde{G}(\widetilde{\psi^k}) - \sigma \right\|_\infty \geq \eta$

- Calculer $d_k = -D\tilde{G}(\widetilde{\psi^k}) + (\tilde{G}(\widetilde{\psi^k}) - \sigma)$

- Trouver le plus petit $\ell \in \mathbb{N}$ sous réserve que $\tilde{\psi}^{k,\ell} := \tilde{\psi}^k + 2^{-\ell}d_k$ satisfasse :

$$\begin{cases} min_i \tilde{G}_i(\tilde{\psi}^{k,\ell}) \geq \varepsilon_0 \\ \left\| \tilde{G}(\psi^{k,\ell}) - \sigma \right\|_\infty \geq (1 - 2^{-(\ell+1)}) \left\| \tilde{G}(\tilde{\psi}^k) - \sigma \right\|_\infty \end{cases}$$

- Définir $\tilde{\psi}^{k+1} = \tilde{\psi}^k + 2^{-\ell}d_k$ $et$ $k \leftarrow k + 1$

Retourner $\psi := (\tilde{\psi}_i^k)_{1 \leq i \leq N}$ $si$ $X = \mathbb{R}^2 \times \{0\}$ ou

$$\psi := (\exp(\tilde{\psi}_i^k))_{1 \leq i \leq N}\ si\ X = \mathbb{S}^2$$

On peut en pratique, bien que cette valeur ne soit donnée qu'à titre d'exemple, choisir $\eta = 10^{-8}$.

On a donc exposé ci-dessus l'une des méthodes pour résoudre des problèmes d'optique anidolique en champ lointain, à savoir construire un lentille ou un miroir, concave ou convexe, pour, à partir d'une source d'éclairage donnée, collimatée ou ponctuelle, réaliser sur une cible à l'infini un éclairage donné.

Bien que ce ne soit pas la seule méthode qui puisse être utilisée dans le cadre de l'invention, la méthode décrite ci-dessus peut être utilisée dans le cadre de l'étape (d) du procédé de l'invention décrit ci-après.

Le problème résolu en champ lointain par la méthode ci-dessus peut également être résolu en champ proche.

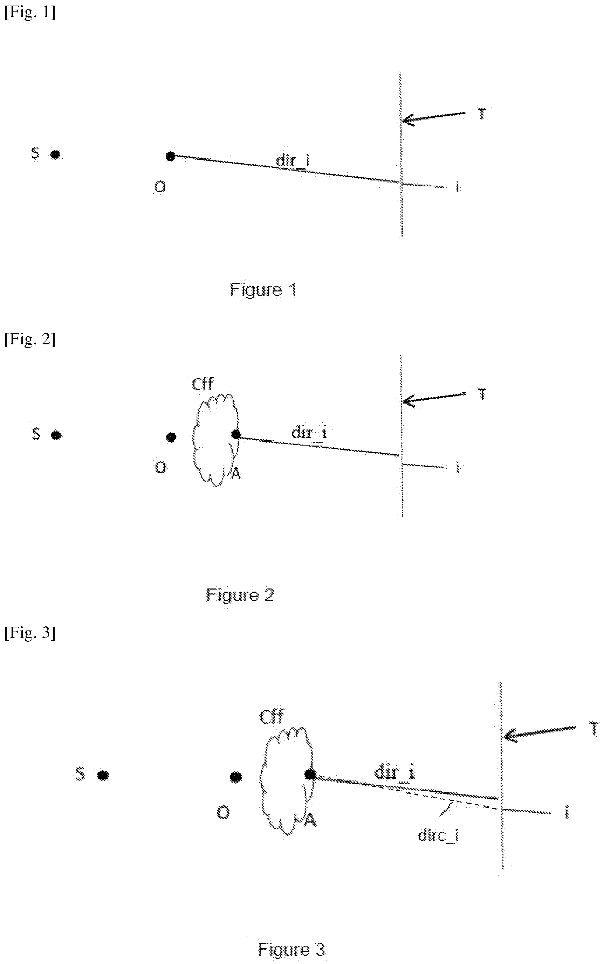

Le procédé de l'invention pour résoudre le problème en champ proche est détaillé ci-après, en liaison avec les Figures 1-3.

Dans le procédé selon l'invention, on dispose d'une cible d'éclairage T et d'une source de lumière d'éclairage S, la cible d'éclairage T étant en champ proche donc à distance finie de la source de lumière d'éclairage S.

A partir de cette source de lumière d'éclairage S, on cherche à obtenir sur la cible T un éclairage donné, par incidence de la lumière issue de la source de lumière d'éclairage S sur un composant optique Cnf à concevoir.

L'éclairage sur la cible T est caractérisé par une quantité de lumière reçue alpha_i en tout point i de la cible T.

Selon le procédé, on effectue les étapes suivantes :

(a) positionner un point origine O entre la source de lumière d'éclairage S et la cible d'éclairage T,

(b) pour chaque point i de la cible d'éclairage T, calculer une direction dir_i qui correspond à la direction du vecteur reliant le point origine O et le point i sur la cible d'éclairage T (Figure 1),

(c) positionner un point de repère A entre le point origine O et la cible d'éclairage T,

(d) créer le composant optique Cff dont la surface passe par le point de repère A et qui, lorsque l'éclairage issu la source de lumière d'éclairage S est incident sur le composant optique Cff, génère un éclairage constitué par l'ensemble des éclairages de direction dir_i et de quantité de lumière alpha_i (Figure 2),

(e) pour chaque point z_i du composant optique Cff générant l'éclairage de direction dir_i et de quantité de lumière alpha_i, calculer une direction corrigée dirc_i qui correspond à la direction du vecteur reliant le point z_i et le point i sur la cible d'éclairage T (Figure 3),

(f) déterminer si, pour chaque point i, la différence entre la direction dir_i et la direction corrigée dirc_i satisfait un critère prédéterminé,

(g) si, pour chaque point i, la différence entre la direction dir_i et la direction corrigée dirc_i satisfait le critère prédéterminé, créer le composant optique C correspondant au composant optique Cff,

(h) si, pour chaque point i, la différence entre la direction dir_i et la direction corrigée dirc_i ne satisfait pas le critère prédéterminé, réitérer les étapes (d) à (f) en substituant dir_i par dirc_i.

Le procédé de l'invention ci-dessus est applicable à tout problème d'optique anidolique, en particulier pour un composant optique fabriqué qui est un miroir ou une lentille, concave ou convexe.

Le composant optique créé dans l'étape g est créé selon les moyens classiques de fabrication d'un composant optique, que ce soit un miroir ou une lentille, par exemple usinage sur une machine-outil à commande numérique 3 axes après usinage préalable de l'ébauche, de préférence assistés ou pilotés par ordinateur pour améliorer le fini du composant optique réalisé, suivi facultativement d'un ponçage et/ou d'un polissage. Pour une lentille, on peut par exemple, mais non exclusivement, utiliser du poly(méthacrylate de méthyle) (PMMA), et pour un miroir de l'aluminium.

Le procédé de l'invention peut être traduit sous forme algorithmique dans l'algorithme 3 ci-après, pour une meilleure compréhension de celui-ci et possiblement une mise en oeuvre de celui-ci automatisée, de manière analogue à la méthode exposée en préambule de la description détaillée pour une cible en champ loitain.

Le procédé décrit ci-dessus, avec un éclairage cible $\sigma = \sum_{i=1}^{N} \sigma_i \delta_{z_i}$ supporté sur un ensemble de points $Z = \{z_1, ..., z_N\} \subset \mathbb{R}^3$ , revient comme indiqué dans le procédé à résoudre itérativement un problème en champ lointain, à savoir l'équation (1), ce qui converge vers la solution en champ proche rapidement.

Dans l'algorithme 3, *RESOUDRE_FF* ($T, \rho, Y^k, \sigma, \eta$) désigne un algorithme qui résout le problème en champ lointain entre une source $\rho : T \mapsto \mathbb{R}^+$ et une cible $\sigma = \Sigma_i \, \sigma_i \delta_{y_i}$ supportée sur $Y \subset \mathbb{S}^2$ pour une erreur numérique $\eta$. L'étape 2 de l'algorithme 1 peut par exemple être mise en oeuvre pour la résolution de ce problème.

<u>Algorithme 3</u> : conception de composant optique pour une cible en champ proche

Entrée : la source $\rho : T \mapsto \mathbb{R}^+$ et une cible $\sigma = \sum_{i=1}^N \sigma_i \delta_{z_i}$ ; un vecteur initial $\psi^0$ et deux tolérances $\eta, \eta_{NF} > 0$.

Initialisation : $\forall i, c_i^0 = O$

**Tant que** $\|c^{k+1} - c^k\|_1 / N > \eta_{NF}$

- calculer $v_i^k = R_{\psi^k}(c_i^k)$

- définir $y_i^k = (z_i - v_i^k)/\|z_i - v_i^k\|$

- résoudre $\psi^{k+1} \leftarrow RESOUDRE\_FF\ (T, \rho, Y^k, \sigma, \eta)$

- mettre à jour $c^{k+1}$ comme étant le barycentre de $V_i(\psi^{k+1})$.

Il est clair que lorsqu'un point fixe est atteint par l'algorithme 3, qui correspond de manière algorithmique au procédé de l'invention, le vecteur de poids correspondant $\psi$ est une solution en champ proche.

Le Demandeur a observé en pratique que le procédé converge très rapidement. Sur plusieurs tentatives, une erreur $\eta_{NF}$ inférieure à $10^{-6}$ a été obtenue après seulement 6 itérations.

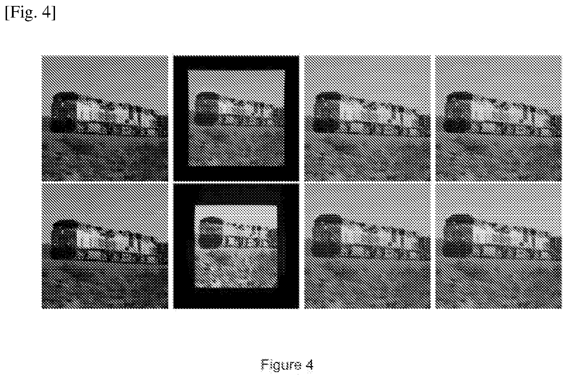

La convergence du procédé de l'invention est illustrée sur la Figure 4, qui représente sur l'exemple de l'image du train sur la première ligne un rendu de l'image cible, de la première itération, de la seconde itération et de la sixième itération pour une configuration lentille concace source collimatée, tandis que la deuxième ligne représente un rendu de l'image cible, de la première itération, de la seconde itération et de la sixième itération pour une configuration miroir convexe source collimatée. On observe donc qu'au bout de six itérations, l'image est quasiment identique à l'image cible.

Le procédé selon l'invention peut être appliqué à tout problème d'optique anidolique, que la source soit ponctuelle ou collimatée, que le composant optique soit un miroir ou une lentille, que la géométrie du composant optique soit concave ou convexe. Le procédé de l'invention fonctionne également si la source de lumière n'est pas uniforme.

**Revendications**

1. - Procédé de fabrication d'un composant optique (Cnf) configuré pour générer sur une cible d'éclairage (T) en champ proche un éclairage ayant un motif déterminé selon lequel chaque point (i) de la cible d'éclairage (T) reçoit une quantité de lumière (alpha_i) par un éclairage issu d'une source de lumière d'éclairage (S) incident sur le composant optique (Cnf) placé entre la source de lumière d'éclairage (S) et la cible d'éclairage (T), **caractérisé par le fait que** le procédé comprend les étapes suivantes :

   (a) positionner un point origine O entre la source de lumière d'éclairage (S) et la cible d'éclairage (T),
   (b) pour chaque point (i) de la cible d'éclairage (T), calculer une direction (dir_i) qui correspond à la direction du vecteur reliant le point origine O et le point (i) sur la cible d'éclairage (T),
   (c) positionner un point de repère A entre le point origine O et la cible d'éclairage (T),
   (d) créer le composant optique (Cff) dont la surface passe par le point de repère A et qui, lorsque l'éclairage issu la source de lumière d'éclairage (S) est incident sur le composant optique (Cff), génère un éclairage constitué par l'ensemble des éclairages de direction (dir_i) et de quantité de lumière (alpha_i), cette étape étant réalisée en utilisant une méthode de création d'un composant optique configuré pour générer un éclairage donné sur une cible d'éclairage en champ lointain,

(e) pour chaque point (z_i) du composant optique (Cff) générant l'éclairage de direction (dir_i) et de quantité de lumière (alpha_i), calculer une direction corrigée (dirc_i) qui correspond à la direction du vecteur reliant le point (z_i) et le point (i) sur la cible d'éclairage (T),

(f) déterminer si, pour chaque point (i), la différence entre la direction (dir_i) et la direction corrigée (dirc_i) satisfait un critère prédéterminé,

(g) si, pour chaque point (i), la différence entre la direction (dir_i) et la direction corrigée (dirc_i) satisfait le critère prédéterminé, fabriquer le composant optique (C) correspondant au composant optique (Cff),

(h) si, pour chaque point (i), la différence entre la direction (dir_i) et la direction corrigée (dirc_i) ne satisfait pas le critère prédéterminé, réitérer les étapes (d) à (f) en substituant (dir_i) par (dirc_i).

**2.** - Procédé selon la revendication 1, **caractérisé par le fait que**, à l'étape (f), il est déterminé si la moyenne sur chaque point (i) des normes des différences entre la direction (dir_i) et la direction corrigée (dirc_i) est inférieure à une valeur prédéterminée.

**3.** - Procédé selon l'une des revendications 1 à 2, **caractérisé par le fait que** le composant optique est l'un parmi un composant optique concave et un composant optique convexe.

**4.** - Procédé selon l'une des revendications 1 à 3, **caractérisé par le fait que** le composant optique est l'un parmi un miroir et une lentille.


**Patentansprüche**

**1.** Verfahren zur Herstellung einer optischen Komponente (Cnf), die konfiguriert ist, auf einem Nahfeld-Beleuchtungsziel (T) eine Beleuchtung zu generieren, die ein bestimmtes Muster hat, gemäß dem jeder Punkt (i) des Beleuchtungsziels (T) eine Lichtmenge (alpha_i) von einer von einer Beleuchtungslichtquelle (S) stammenden Beleuchtung empfängt, die auf die optische Komponente (Cnf) fällt, die zwischen der Beleuchtungslichtquelle (S) und dem Beleuchtungsziel (T) platziert ist, **dadurch gekennzeichnet, dass** das Verfahren die folgenden Schritte enthält:

(a) Positionieren eines Ursprungspunkts O zwischen der Beleuchtungslichtquelle (S) und dem Beleuchtungsziel (T),

(b) für jeden Punkt (i) des Beleuchtungsziels (T), Berechnen einer Richtung (dir_i), die der Richtung des Vektors entspricht, der den Ursprungspunkt O und den Punkt (i) auf dem Beleuchtungsziel (T) verbindet,

(c) Positionieren eines Bezugspunkts A zwischen dem Ursprungspunkt O und dem Beleuchtungsziel (T),

(d) Erzeugen der optischen Komponente (Cff), deren Fläche durch den Bezugspunkt A verläuft, und die, wenn die von der Beleuchtungslichtquelle (S) stammende Beleuchtung auf die optische Komponente (Cff) fällt, eine Beleuchtung generiert, die aus der Gesamtheit der Richtungsbeleuchtungen (dir_i) und Lichtmenge (alpha_i) besteht, wobei dieser Schritt durchgeführt wird, indem eine Methode der Erzeugung einer optischen Komponente verwendet wird, die konfiguriert ist, eine gegebene Beleuchtung auf einem Fernfeld-Beleuchtungsziel zu generieren,

(e) für jeden Punkt (z_i) der optischen Komponente (Cff), die die Richtungsbeleuchtungen (dir_i) und Lichtmenge (alpha_i) generiert, Berechnen einer korrigierten Richtung (dirc_i), die der Richtung des Vektors entspricht, der den Punkt (z_i) und den Punkt (i) auf dem Beleuchtungsziel (T) verbindet,

(f) Bestimmen ob, für jeden Punkt (i), die Differenz zwischen der Richtung (dir_i) und der korrigierten Richtung (dirc_i) ein vorbestimmtes Kriterium erfüllt,

(g) wenn, für jeden Punkt (i), die Differenz zwischen der Richtung (dir_i) und der korrigierten Richtung (dirc_i) das vorbestimmte Kriterium erfüllt, Herstellen der der optischen Komponente (Cff) entsprechenden optischen Komponente (C),

(h) wenn, für jeden Punkt (i), die Differenz zwischen der Richtung (dir_i) und der korrigierten Richtung (dirc_i) das vorbestimmte Kriterium nicht erfüllt, Wiederholen der Schritte (d) bis (f), indem (dir_i) durch (dirc_i) ersetzt wird.

**2.** Verfahren nach Anspruch 1, **dadurch gekennzeichnet, dass** im Schritt (f) bestimmt wird, ob der Mittelwert an jedem Punkt (i) der Normen der Differenzen zwischen der Richtung (dir_i) und der korrigierten Richtung (dirc_i) niedriger ist als ein vorbestimmter Wert.

**3.** Verfahren nach einem der Ansprüche 1 bis 2, **dadurch gekennzeichnet, dass** die optische Komponente eine von einer konkaven optischen Komponente und einer konvexen optischen Komponente ist.

4. Verfahren nach einem der Ansprüche 1 bis 3, **dadurch gekennzeichnet, dass** die optische Komponente eines von einem Spiegel und einer Linse ist.

**Claims**

1. - Method for fabricating an optical component (Cnf) that is configured so as to generate on a near field illumination target (T) an illumination that has a determined pattern according to which each point (i) of the illumination target (T) receives a quantity of light (alpha_i) via an illumination originating from an illumination light source (S) which is incident on the optical component (Cnf) placed between the illumination light source (S) and the illumination target (T), **characterized in that** the method includes the following steps:

    (a) positioning an origin point O between the illumination light source (S) and the illumination target (T);
    (b) for each point (i) of the illumination target (T), computing a direction (dir_i) which corresponds to the direction of the vector connecting the origin point O and the point (i) on the illumination target (T);
    (c) positioning a reference point A between the origin point O and the illumination target (T);
    (d) creating the optical component (Cff) whose surface passes through the reference point A and which, when the illumination originating from an illumination light source (S) is incident on the optical component (Cff), generates an illumination comprised of the all the illuminations of direction (dir_i) and quantity of light (alpha_i);
    (e) for each point (z_i) of the optical component (Cff) that generates the illumination of direction (dir_i) and quantity of light (alpha_i), computing a corrected direction (dirc_i) which corresponds to the direction of the vector connecting the point (z_i) and the point (i) on the illumination target (T);
    (f) determining whether or not, for each point (i), the difference between the direction (dir_i) and the corrected direction (dirc_i) satisfies a predetermined criterion;
    (g) if, for each point (i), the difference between the direction (dir_i) and the corrected direction (dirc_i) satisfies the predetermined criterion, fabricating the optical component (C) that corresponds to the optical component (Cff),
    (h) if, for each point (i), the difference between the direction (dir_i) and the corrected direction (dirc_i) does not satisfy the predetermined criterion, reiterating the steps (d) to (f) by substituting (dir_i) with (dirc_i).

2. - A method according to claim 1, **characterized in that**, in the step (f), it is determined as to whether on each point (i) the mean of the norms of the differences between the direction (dir_i) and the corrected direction (dirc_i) is less than a predetermined value.

3. - A method according to one of claims 1 to 2, **characterized in that** the optical component is one of a concave optical component and a convex optical component.

4. - A method according to one of claims 1 to 3, **characterized in that** the optical component is one of a mirror and a lens.

[Fig. 1]

Figure 1

[Fig. 2]

Figure 2

[Fig. 3]

Figure 3

[Fig. 4]

Figure 4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **QUENTIN MÉRIGOT ; JOCELYN MEYRON ; BORIS THIBERT.** Light in power: A general and parameter free algorithm for caustic design. *arXiv:1708.04820*

- **YULIY SCHWARTZBURG ; ROMAIN TESTUZ ; ANDREA TAGLIASACCHI ; MARK PAULY.** High contrast computational caustic design. *ACM, Transactions on Graphics (TOG),* 2014, vol. 33 (4), 74